# EUROPEAN PATENT APPLICATION

(11) **EP 2 479 592 A2**
(43) Date of publication of application: **25.07.2012**
(21) Application number: 12000275.3
(22) Date of filing: 18.01.2012
(51) Int. Cl.: G02B 6/00

(54) **Backlight unit with corner light source**

(30) Priority: 20.01.2011 KR 20110005695
(71) Applicant: LG ELECTRONICS INC., Yeongdeungpo-gu Seoul 150-721 (KR)
(72) Inventor: Cheon, Kangwoon, Gyeongsangnam-Do (KR)
(74) Representative: TER MEER - STEINMEISTER & PARTNER GbR

(57) **Abstract**

A backlight unit having a corner light source unit includes an optical unit having an optical sheet stacked on a bottom sash, and a liquid crystal display panel stacked on the optical sheet, and a light source unit located at the bottom sash to allow radiated light to be transferred to the liquid crystal display panel via two surfaces of the liquid crystal display panel.

## Description

### BACKGROUND OF THE INVENTION

### 1. Field of the Invention

The subject matter of the disclosure generally relates to improved backlight units that are associated with devices having a liquid crystal display panel.

### 2. Background of the Invention

A Liquid Crystal Display (LCD) panel is unable to emit light without the aid a backlight unit, which is a separate device for supplying light thereto.

Different types of backlight units include: a Cold Cathode Fluorescent Lamp (CCFL), an External Electrode Fluorescent Lamp (EEFL), a Light Emitting Diode (LED), a Flat Fluorescent Lamp (FFL), and the like. In recent years, backlight units using LED-based backlight units have been found to be particularly advantageous with respect to enhanced optical quality and reduced power consumption.

Backlight units may be classified into an edge type and a direct type in accordance with a preferred installation position. The edge (lateral) type lighting method is configured such that lamps are typically aligned at one side or both sides of an LCD panel, while the direct (rear) type lighting method is configured such that a plurality of lamps can be aligned directly below a diffusion sheet so as to emit light toward the LCD panel.

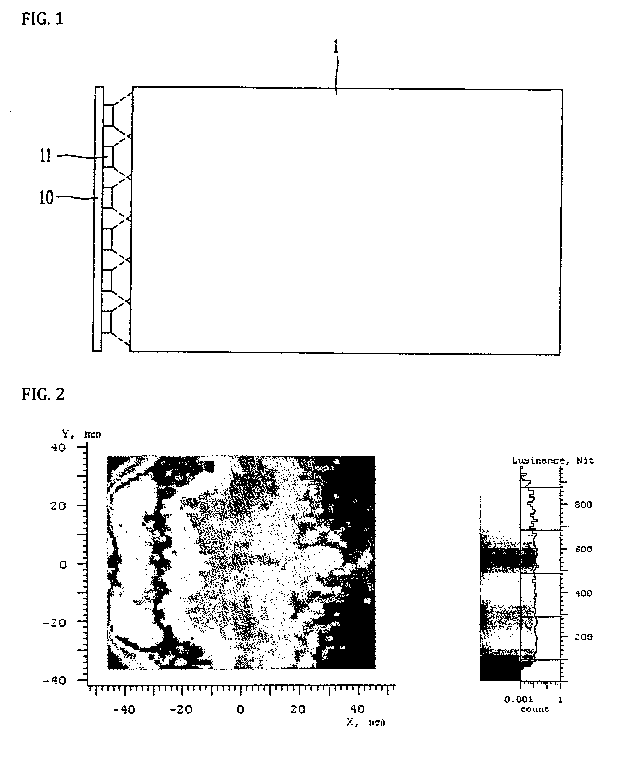

FIG. 1 shows an example backlight unit employing the edge type lighting method according to the related art.

The edge type backlight unit of FIG. 1, includes a bottom sash and a plurality of optical sheets, such as a diffusion sheet and a light guide plate that are respectively deposited (stacked) on the bottom sash (not shown). An LCD panel 1 is deposited on the optical sheet. A printed circuit board 10 having a plurality of LEDs (equivalently referred to herein as LED chips) 11 installed at one side or both sides of the bottom sash such that the plurality of LEDs 11 are aligned with preset intervals in a lengthwise direction of a side surface of the LCD panel 1.

Accordingly, when the LEDs 11 emit light, the light is supplied from either one side or both sides of the LCD panel 1. The supplied light is diffused by the optical sheets so as to be provided toward the side surface of the LCD panel 1.

Quality of image is particularly important for large display devices, such as TVs, monitors and the like, so an employed backlight unit has to be capable of supplying light with a uniform luminance over the entire LCD panel 1. Accordingly, a plurality of LED chips must be provided to emit such uniform lighting. In contrast, for home appliances such as refrigerators, ovens, and the like, LCD panels are typically small in size and as such they do not require necessary lighting to produce a high image quality. To save manufacturing costs, it is typically necessary to minimize the number of LED chips in a corresponding light source.

FIG. 2 shows the measurement of luminance of an LCD panel by aligning one LED chip at a side of the LCD panel. In accordance with FIG. 2, where only one LED chip is provided, the lighting provided is insufficient due to a drastic variations of luminance of the entire LCD panel. When using a single LED chip, to emit light to an entire LCD panel, a high-luminance LED chip has to be used. However, use of the high-luminance LED chip in the above lighting scenarios exacerbates the non-uniform luminance deficiency.

### SUMMARY OF THE INVENTION

To address the above drawbacks, a one primary objective of the present invention is to provide a backlight unit that is capable of minimizing luminance variations of an liquid crystal display (LCD) panel having a limited number of LED chips employed in the panel's light source unit.

To achieve these and other advantages the present disclosure provides for a backlight unit including: an optical unit having an optical sheet stacked on a bottom sash, a LCD panel stacked on the optical sheet, and a light source unit located on the bottom sash to allow radiated light to illuminate the LCD panel at two distinct surfaces of the LCD panel.

In accordance with another aspect of the present disclosure, there is provided a backlight unit including: an optical unit having an optical sheet stacked on a bottom sash, a liquid crystal display panel stacked on the optical sheet, and a light source unit located at the bottom sash to allow part of radiated light to be transmitted through multiple surfaces (i.e., two surfaces) at a corner of the LCD panel, where the two surfaces face each other in a perpendicular configuration.

In this arrangement, radiated light can be introduced via two surfaces of the LCD panel or at least a portion of the radiated light is transmitted via two surfaces at the LCD panel that are facing each other. Hence, an area with the highest luminance (also referred to herein as 'spot' area) generated by the light source unit is emitted towards areas surrounding of the corner of the liquid crystal panel, thereby minimizing luminance variations over the LCD panel when a limited number of LED chips is employed (e.g., when only a single LED chip or a pair of LED chips is/are employed). In an embodiment, the light source unit may be spaced apart from the LCD panel by a preset distance, which may employ adjustable spacing implements to further reduce spot areas at the LCD panel.

In addition, the LCD panel may be located within a radiation range of the light source unit, namely, within an entrance angle thereof, thereby further reducing the luminance differentiation of an illuminated LCD panel.

The multitude of benefits associated with the present disclosure will become more apparent from the detailed description. However, it should be understood that the detailed description and specific examples provided therein, while indicating a limited number of specific embodiments, are given for explanatory purposes and it should be understood that various changes and modifications may be made thereto, without departing from the spirit and scope of the present invention.

### BRIEF DESCRIPTION OF THE DRAWINGS

The accompanying drawings, which are included to provide a further understanding of the invention and are incorporated in, and constitute a part of this specification, illustrate one or more embodiments and together with the description serve to help explain principles associated with the invention.
FIG. 1 is a planar view showing an example backlight unit, in accordance with related art;
FIG. 2 is a graphical representation showing a luminance distribution of an LCD panel using the backlight unit of FIG. 1, in accordance with related art;
FIG. 3 is a planar view showing an LCD panel having a backlight unit in accordance with one embodiment of the disclosure;
FIG. 4 is a graphical representation showing a luminance distribution associated with the embodiment of FIG. 3;
FIG. 5 is a planar view showing a backlight unit in accordance with one embodiment of the disclosure;
FIG. 6 is an magnified perspective view of the light source unit shown in FIG. 5;
FIG. 7 is a sectional view associated with FIG. 6;
FIG. 8 is a sectional view showing an example position adjusting unit associated with FIG. 5; and
FIG. 9 is a sectional view showing another position adjusting unit associated with FIG. 5.

### DETAILED DESCRIPTION OF THE INVENTION

Description will now be given in detail of a backlight unit having a corner light source in accordance with the exemplary embodiments of the present disclosure, with reference to the accompanying drawings. For the sake of brief description with reference to the drawings, the same or equivalent components will be provided with the same reference numbers, and corresponding description thereof will not be repeated.

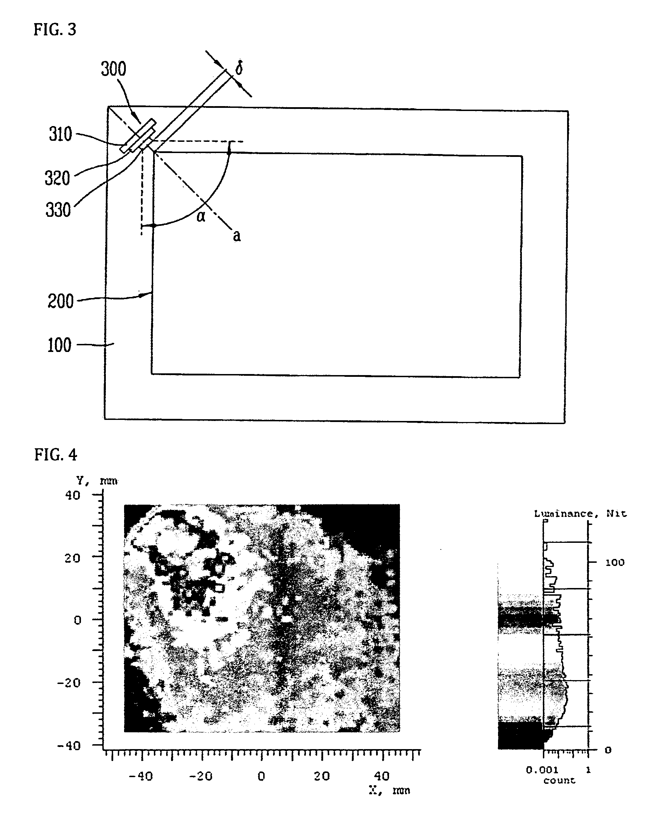

FIG. 3 is a planar view showing an LCD panel having a backlight unit in accordance with one exemplary embodiment of this specification. FIG. 4 is a view showing a corresponding luminance distribution associated with the embodiment of FIG. 3.

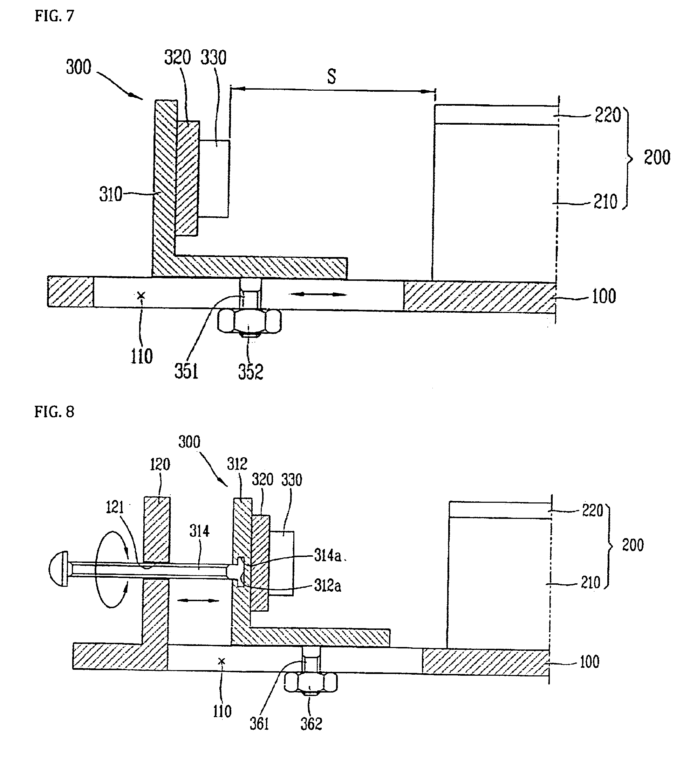

As shown in FIGS. 3 and 4, the LCD panel may include a bottom sash 100. The bottom sash 100 is a member for providing a space for mounting an optical unit 200 and the light source unit 300. The optical unit 200 may be disposed on an upper surface of the bottom sash 100. The optical unit 200 may include an optical sheet 210 (as depicted in FIGS. 7 and 8) formed by depositing (stacking) a light guide plate and passivation sheets thereon, and a Liquid Crystal Display (LCD) panel 220 located on the optical sheet 210.

In the structure, the optical unit 200 may be in a rectangular shape having four surfaces and four corners.

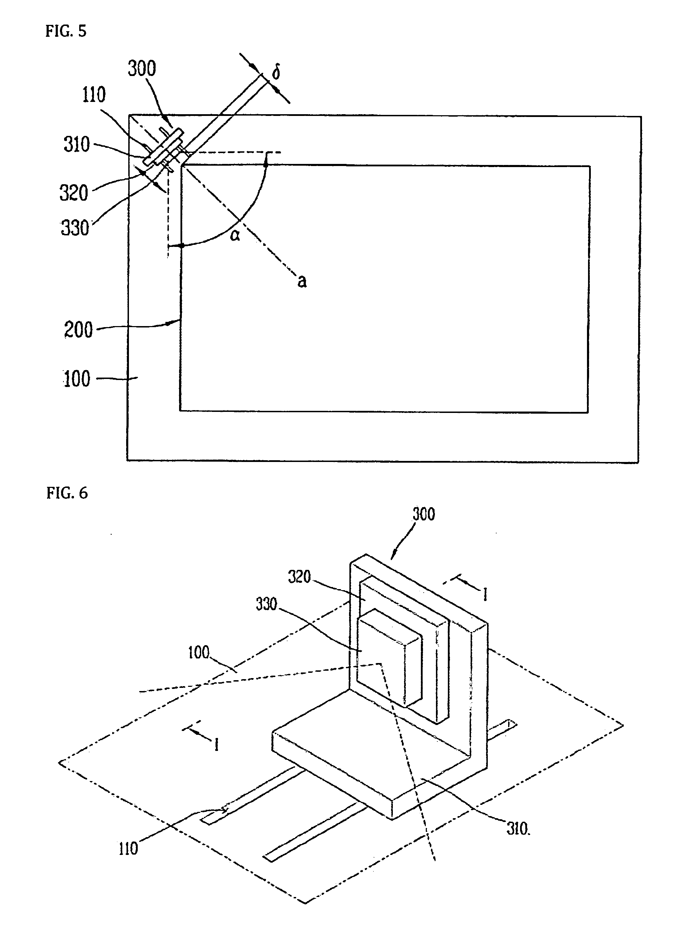

A light source unit 300 may be located adjacent to one of the corners of the optical unit 200. The light source unit 300 may irradiate light with a preset entrance angle α toward the optical unit 200. The radiated light may be diffused through the optical unit 200. As shown in the combination of FIGS. 5, 7, and 8, the LCD panel 220 is located within the entrance angle a, the radiated light uniformly illuminates the LCD panel 220, as is graphically depicted in FIG. 4.

Also, the light source unit 300 is located adjacent to a corner of the LCD panel 220, so the light irradiated from the light source unit 300 may be transferred to the LCD panel 220 via two surfaces of the LCD panel, namely, a left surface and an upper surface.

Here, the backlight unit 300 may include a substrate 320, and an LED chip 330 mounted on the substrate 320. Here, the LED chip 330 may use a high-luminance LED. The substrate 320 may be fixed to a substrate fixing bracket 310, and the substrate fixing bracket 310 may be disposed on the bottom sash 100 at a position adjacent to the corner of the light source unit 300.

The light source unit 300 may be located with being spaced apart from the corner of the optical unit 200 by a preset distance δ. As shown in FIG. 4, when the light source unit 300 is located adjacent to the LCD panel, a spot area may be formed right before the light source unit 300, and dark areas may be formed at left and right sides of the spot area. Hence, when the light source unit 300 is spaced apart from the LCD panel 220 by the preset distance, the spot area may be located outside the LCD panel 220, resulting in a further reduction of luminance variations of the LCD panel 220.

Still referring to FIG. 4, it can also be noticed that areas with a similar luminance increase at the LCD panel 220 are located farther away from the light source unit 300, as compared to the graphical representation of the related art (depicted in FIG. 2). That is, in FIG. 4, an area with a luminance corresponding to a uniformly lighted area is larger than an area corresponding to a spot area or luminance aberration. Accordingly, when the light source unit 300 is spaced further from a surface of the LCD panel 220 a more uniform luminance can be achieved. A degradation of an average luminance due to the light source unit 300 becoming more distant from the LCD panel 200, is minimized with the use of an appropriate high-luminance LED chip. By way of example, when the light source unit 300 is spaced apart from the corner of the LCD panel by about a distance ranging between 10 to 17mm, luminance variations have been found to be effectively minimized.

FIGS. 5, 6, and 7 show examples of a position adjusting unit of an LCD panel light source. Referring to FIG. 5, a substrate fixing bracket 310 may be coupled to the bottom sash 100 to facilitate movement along guide slits 110.

Referring to FIGS. 6 and 7, the substrate 320 may be fixed onto the bracket 310, and the LED chip 330 (a high-intensity light source) may be mounted onto the substrate 320. With respect to the sectional views of FIGS. 7, 8, and 9, only single components (i.e., a fixing bolt, a fixing nut, a guide slit, etc.) of component pairs are shown for illustrative purposes; however, it should be understood (in accordance with the perspective view of FIG. 6) that pairs of such components may actually exist in the light source unit assembly's 300. A pair of fixing bolts 351 may be fixed to a lower end of the substrate fixing bracket 310. A pair of guide slits 110 in parallel to each other may be recessed into the bottom sash 100.

Fixing nuts 352 may be coupled to the pair of fixing bolts 351 via the pair of guide slits 110, respectively. Accordingly, the position of the bracket 310 can be fixed. With the configuration, the spaced distance can be randomly set. This can be used upon degradation of luminance due to the aging of the LED chip while the product is fabricated or used.

FIG. 8 shows another example of a position adjusting unit that may include: a fixing bolt 314 protruding from one side of a substrate fixing bracket 312, and a supporting bracket 120 installed in an upright state on the bottom sash 100 adjacent to the one side of the substrate fixing bracket 312, and having a fixing hole 121 to which the fixing bolt 314 is coupled. A rotation hole 312a, in which an end portion 314a of the fixing bolt 314 is rotatably inserted, may be formed at the substrate fixing bracket 312.

In addition, a lower end of the substrate fixing bracket 312 is shown having protrusions 361 inserted through the pair of guide slits 110, respectively, and a stopping end 362 formed at an end portion of each protrusion 361. Hence, the substrate fixing bracket 312 may be stably slidable within the guide slits 110.

The fixing bolt 314 may be coupled to a fixing hole 121 of the supporting bracket 120 by a screw, and an end portion of the fixing bolt 314 may be inserted into the rotation hole 312a through the supporting bracket 120. A head portion 314a may be further formed at the end portion of the fixing bolt 314 to prevent separation from the substrate fixing bracket 312.

With the configuration, when the fixing bolt 314 is rotated, the fixing bolt 314 may be moved back or forth according to the rotated direction, and the substrate fixing bracket 312 that is fixed to the end portion of the fixing bolt 314, can accordingly be moved back or forth. Consequently, the spaced distance can be dynamically adjusted maximize the illumination uniformity.

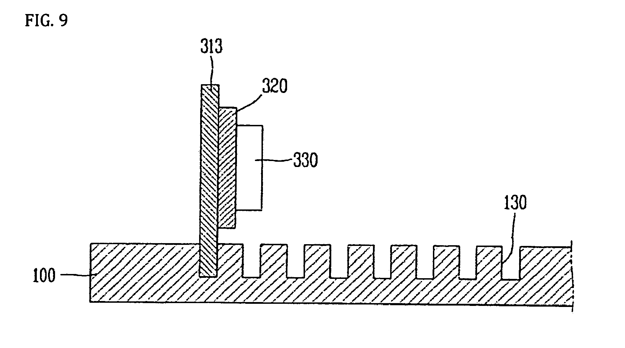

FIG. 9 shows another example of the position adjusting unit that may include a plurality of fixing recesses 130 formed at the bottom sash 100 at preset spacing intervals. A substrate fixing bracket 313 may be fixedly inserted into each fixing recess 130. Therefore, the spaced distance can be adjusted according to a position where the substrate fixing bracket 313 is inserted.

The foregoing embodiments are intended to elucidate various advantages and benefits associated with the present invention and as such, they are not to be construed as limiting the present disclosure so a subset of specific independent device configurations. The present teachings can be readily applied to similar devices, without departing from the spirit and scope of the combined disclosure. Many alternatives, modifications, and variations will be apparent to those skilled in the art. The features, structures, methods, and innovative characteristics of the disclosed embodiments may be combined in various ways to achieve additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A backlight unit comprising:
an optical unit having an optical sheet stacked on a bottom sash, and a liquid crystal display panel stacked on the optical sheet; and
a light source unit located at the bottom sash to allow radiated light, emanating from the light source unit, to be transferred to the liquid crystal display panel at two adjoining surfaces of the liquid crystal display panel.

2. The backlight unit of claim 1, wherein the liquid crystal display panel is located adjacent to the backlight unit and within a predetermined radiation range of the light source unit to effectuate a uniform illumination of the liquid crystal display panel .

3. The backlight unit of claim 1, wherein the light source unit is located at a corner of the liquid crystal display panel.

4. The backlight unit of claim 1, wherein the light source unit is spaced away from a corner of the liquid crystal display panel by a preset distance between the range of 12mm to 17mm.

5. The backlight unit of claim 1, wherein the liquid crystal display panel is a component of an appliance and the light source unit comprises a light emitting diode chip.

6. The backlight unit of claim 5, wherein the appliance is a common household appliance and the liquid crystal display is disposed on an external surface thereof.

7. The backlight unit of claim 1, wherein the light source unit is located at a position along a diagonal path that substantially intersects two corners of the liquid crystal display.

8. The backlight unit of claim 7, wherein the light source unit is disposed on the bottom sash a preset distance away from the liquid crystal display along the diagonal path.

9. The backlight unit of claim 1, wherein the light source unit comprises a plurality of light emitting diode chips.

10. The backlight unit of claim 1, further comprising a position adjusting unit that is coupled with the bottom sash via a substrate fixing bracket.

11. The backlight unit of claim 10, wherein the substrate fixing bracket of the position adjusting unit is movably coupled with a guide slit of the bottom sash.

12. The backlight unit of claim 10, wherein the substrate fixing bracket of the position adjusting unit comprises a fixing implement to adjustably secure the backlight unit to the bottom sash.

13. The backlight unit of claim 12, wherein the fixing implement comprises a fixing bolt to which a fixing nut can be attached.
